# EUROPÄISCHE PATENTANMELDUNG

(11) **EP 1 207 354 A2**
(43) Veröffentlichungstag der Anmeldung: **22.05.2002**
(21) Anmeldenummer: 01890317.9
(22) Anmeldetag: 14.11.2001
(51) Int. Cl.: F24D 3/14

(54) **Auflageleiste, Heiz- bzw, Kühlregister sowie flächiger Bauteil aus aushärtbarem Werkstoff**

(30) Priorität: 17.11.2000 AT 19382000
(71) Anmelder: Steiner, Josef, 3370 Ybbs/Donau (AT)
(72) Erfinder: Steiner, Josef, 3370 Ybbs/Donau (AT)
(74) Vertreter: Laminger, Norbert, Mag.

(57) **Zusammenfassung**

Eine Auflageleiste für eine Bewehrung für flächige Elementen aus aushärtbarem Werkstoff, vorzugsweise für die untere Bewehrungslage von Ortbeton- oder Filigrandecken aus Beton oder für Bewehrungen von Klimaplatten, besteht aus einem im wesentlichen umgekehrt U-förmigen Profil (1), dessen Boden (2) mit Öffnungen (3) und dessen Seitenwände (4) mit Ausschnitten (5) zum Eindringen des aushärtbaren Werkstoffes versehen ist. Um eine Fixierung für Rohre (8) oder gleichartige längliche Bauteile in einem bestimmten Abstand oberhalb einer Schalung oder gleichartiger Formen für aushärtbare Werkstoffe zu schaffen, welche einerseits die Rohre (8) einfach aber dennoch sicher hält und selbst soviel Stabilität und Festigkeit aufweist, dass sie einerseits die Rohre (8) od. dgl. vor Beschädigung schützt und andererseits zur Anbringung und allenfalls auch lagemäßigen Fixierung weiterer Einbauten (11), beispielsweise Bewehrungslagen von Betonbauteilen, insbesondere für Ortbetondecken, geeignet ist, sind in den Seitenwänden (4) des Profils (1) zusätzlich Klemmstellen (7) für weitere Bauteile, beispielsweise Leitungen (8) für ein Heiz- und/oder Kühlmedium, ausgearbeitet.

## Beschreibung

Die Erfindung betrifft eine Auflageleiste für eine Bewehrung für flächige Elemente aus aushärtbarem Werkstoff, vorzugsweise für die untere Bewehrungslage von Ortbeton- oder Filigrandecken aus Beton oder für Bewehrungen von Klimaplatten, bestehend aus einem im wesentlichen umgekehrt U-förmigen Profil, dessen Boden mit Öffnungen und dessen Seitenwände mit Ausschnitten zum Eindringen des aushärtbaren Werkstoffes versehen ist, ein Heiz- bzw. Kühlregister zur Integrierung in flächige Bauteile aus einem aushärtbaren Werkstoff, insbesondere Ortbetondecken oder Filigrandecken aus Beton bzw. für Klimaplatten, bestehend aus mehreren parallelen Leitungen für das Heiz- und/oder Kühlmedium in vorzugsweise ebener Anordnung, vorzugsweise verbunden durch integrierte Rohrbögen, und einer Haltestruktur mit fix angeordneten Klemmstellen für die Rohrleitungen, sowie einen flächigen Bauteil aus aushärtbarem Werkstoff, insbesondere eine Klimaplatte, Ortbetondecke oder Filigrandecke aus Beton, mit einem integrierten Heiz- oder Kühlregister und einer Bewehrung.

Bei der Herstellung von Ortbetondecken ist es bekannt, die unterste Bewehrungslage zur Beabstandung von der unteren Schalung auf Auflageleisten aufzulegen, welche aus einem im wesentlichen U-förmigen Profil gebildet sind, welches mit der offenen Seite auf die Schalung gelegt wird und das in den Seitenteilen Ausschnitte und im Boden Öffnungen aufweist, durch welche der Beton auch in das Innere des Profils eindringen und somit nach Aushärtung einen kompakten Bauteil bilden kann. An der nach unten weisenden Oberfläche der Ortbetondecke treten dann lediglich die schmalen Kanten der Seitenteile des Profils an die Oberfläche, welche aber durch ihre geringe Fläche kaum in Erscheinung treten, so dass eine schalreine Oberfläche vorliegt. Prinzipiell in gleicher Weise können auch Filigrandecken im Werk vorgefertigt und dann an die Baustelle geliefert werden, ebenso auch andere flächige Bauteile oder Gebäudeabschnitte vor Ort hergestellt werden.

Wenn nun eine Klimatisierung des Raumes über die Decke oder einen beliebigen anderen flächigen Bauteil erwünscht ist, ist es bekannt, zu diesem Zweck Rohrleitungen für ein Heiz- oder Kühlmedium in den Bauteil zu integrieren, beispielsweise auch in den Beton einzubetten. So offenbart etwa das österr. Gebrauchsmuster Nr. 3 384 eine Energiedecke aus Stahlbeton-Fertigteilelementen, bei welchen an der der Oberfläche zugewandten Seite der äußersten Bewehrungslage Rohrleitungen für ein Heiz- oder Kühlmedium eingegossen worden sind. Es ist aber keinerlei Hinweis auf ein spezielle Art der Fixierung der Leitungen vorhanden und bei der beschriebenen Anordnung der Rohrleitungen "in der Zug- oder Druckplatte" kann es speziell beim Eingießen des Betons in die Form zu Verschiebungen der Rohrleitungen bzw. zu Beschädigungen durch Reiben, Scheuern oder überhaupt den Kontakt mit der Bewehrung des Bauteils kommen.

In der EP 0 992 637 A1 ist daher eine Rohrklemmleiste für die Verwendung in Filigrandecken offenbart, welche als im wesentlichen flacher Bauteil senkrecht zu den Rohrleitungen liegt, zumindest einige davon übergreift und abstehende Klemmstellen für die einzelnen Rohre an ihrer Unterseite aufweist. Um die Rohre von der Oberfläche der Filigrandecke beabstandet zu halten, sind entlang der Leiste zwischen den Klemmstellen für die Rohre von der Leiste senkrecht abstehende Distanzfüßchen vorgesehen, die eine größere Länge aufweisen als es der Höhe von Klemmstelle und eingesetzter Rohrleitung entspricht. Diese Rohrklemmleiste ist allerdings sehr flexibel und schwach, so dass keinerlei Möglichkeit besteht, sie als tragenden Teil für andere, schwerere Einbauten zu verwenden.

Bei Ortbetondecken oder gleichartigen flächigen Bauteilen wiederum, in welche Rohrregister für die Klimatisierung des Raumes integriert werden sollen, müssen die Leitungen zuunterst aber doch von der Schalung ausreichend beabstandet aufgelegt werden, danach muss die unterste Bewehrungslage aufgebracht und fixiert werden, dann die weiteren Einbauten, bis schließlich der Beton eingegossen werden kann. Bei diesen Arbeiten können die Leitungen ebenfalls sehr leicht verschoben oder auch beschädigt werden, sei es durch die Bewehrungsstäbe oder ―felder, durch darübergehende Arbeiter oder auch durch herabfallende Teile. Überdies ist das Verlegen der Leitungen sehr zeit- und personalaufwendig, wenn es vor Ort erfolgen muss.

Die Aufgabe der vorliegenden Erfindung war es daher, eine Fixierung für Rohre oder gleichartige längliche Bauteile in einem bestimmten Abstand oberhalb einer Schalung oder gleichartiger Formen für aushärtbare Werkstoffe zu schaffen, welche einerseits die Rohre einfach aber dennoch sicher hält und selbst soviel Stabilität und Festigkeit aufweist, dass sie einerseits die Rohre od. dgl. vor Beschädigung schützt und andererseits zur Anbringung und allenfalls auch lagemäßigen Fixierung weiterer Einbauten, beispielsweise Bewehrungslagen von Betonbauteilen, insbesondere für Ortbetondecken, geeignet ist.

Eine weitere Aufgabe war ein Heiz- und/oder Kühlregister, welches rasch und einfach in beliebige Bauteile aus aushärtbarem Werkstoff zu integrieren ist, auch vor Ort auf der Baustelle, und welches gleichzeitig dem Bauteil eine gewisse Festigkeit verleiht, d.h. als Teil der Bewehrung dieses Bauteils genutzt werden kann, sowie die Rohre für das Heiz- und/oder Kühlmedium vor Beschädigung schützt.

Eine weitere Aufgabe war schließlich ein flächiger Bauteil aus aushärtbarem Werkstoff, insbesondere eine Ortbetondecke, welche schalrein in einfacher und rascher Weise mit möglichst geringem Zeit- und Personalaufwand herstellbar ist und zur Klimatisierung von Räumen verwendet werden kann, die von diesem Bauteil begrenzt werden.

Zur Lösung der ersten dieser Aufgaben ist für eine eingangs beschriebene Auflageleiste für Bewehrungen erfindungsgemäß vorgesehen, dass in den Seitenwänden des Profils zusätzlich Klemmstellen für weitere Bauteile, beispielsweise Leitungen für ein Heiz- und/oder Kühlmedium, ausgearbeitet sind. Die Auflageleisten für Bewehrungen weisen aufgrund der an sie gestellten Anforderungen eine hohe mechanische Stabilität auf, die eine sichere Lagefixierung der Rohrleitungen in allen Raumrichtungen und eine gute Schutzfunktion gleichzeitig zu ihrer Funktion als Abstandhalter für die unterste Bewehrungslage gewährleistet.

Eine besonders einfach herstellbare und funktionssichere Leiste ist gemäß einem weiteren Merkmal der Erfindung gegeben, wenn die Klemmstellen durch Ausschnitte in den Seitenwänden des Profils gebildet sind, die vorteilhafterweise mit den eingesetzten Bauteilen eine zumindest teilweise formschlüssige Verbindung bilden. Diese Ausschnitte in den im wesentlichen ebenen Seitenwänden des Profils sind leicht durch übliche Verfahren herstellbar und die Rohre sind in die derart gebildeten Klemmstellen einfach und rasch auch manuell einsetzbar.

Vorteilhafterweise sind dabei die Klemmstellen in beiden Seitenwänden des Profils in dessen Querrichtung im wesentlichen fluchtend angeordnet.

Besonders einfach im Aufbau und der Herstellung ist eine Leiste gemäß einem weiteren Erfindungsmerkmal, das darin besteht, dass die Ausschnitte in den Seitenwänden in Querrichtung des Profils im wesentlichen fluchtend angeordnet sind und dass zumindest einige Klemmstellen zwischen zwei benachbarten Paaren von fluchtenden Ausschnitten vorgesehen sind.

In besonders vorteilhafter Weise können weitere Bauteile, beispielsweise Bewehrungsplatten oder ―gitter, aber auch zusätzliche Leitungen oder andere Einbauten, mit der Leiste verbunden werden, wenn diese gemäß einem weiteren Merkmal der Erfindung an der Außenseite des Profils, im wesentlichen parallel zu dessen Seitenwänden, vorzugsweise fluchtend damit, Stege mit Klemmstellen für weitere Bauteile, beispielsweise Stäbe eines Bewehrungsgitters, aufweist.

Vorteilhafterweise ist auch hier vorgesehen, dass die Klemmstellen durch Ausschnitte in den Seitenwänden des Profils gebildet sind, die vorteilhafterweise mit den eingesetzten Bauteilen eine zumindest teilweise formschlüssige Verbindung bilden. Damit sind auch diese zusätzlichen Klemmstellen einfach und mittels üblicher Verfahren herstellbar und sind die zusätzlichen Bauteile rasch, einfach und auch manuell mit der Leiste zu verbinden.

Wenn dann gemäß einer vorteilhaften Ausführungsform vorgesehen ist, dass die Klemmstellen in den Stegen in Querrichtung des Profils gesehen genau fluchtend mit den Klemmstellen in dessen Seitenwänden vorgesehen sind, kann durch Verwendung eines Bewehrungsgitters bzw. ähnlich stabiler Bauteile, die über die zusätzlichen Klemmstellen mit der Leiste verbunden werden, ein guter Schutz der mit diesen mechanisch stabilen Bauteilen fluchtend angeordneten Rohrleitungen vor Beschädigung erzielt werden, zumindest gegenüber Einflüssen, die aus Richtung der Bewehrung auf die Rohrleitungen einwirken.

Zur Lösung der weiteren Aufgabe ist erfindungsgemäß ein Rohrregister derart gestaltet, dass die Haltestruktur aus einem flächigen Grundgerüst besteht, das mit zumindest einer Auflageleiste gemäß einem der vorhergehenden Absätze verbunden ist. Es ist dadurch ein selbst bei großer flächenmäßiger Ausdehnung sehr stabiles Rohrregister verwirklichbar, das vorgefertigt und leicht am Einsatzort platziert werden kann, insbesondere nach Transport auf die Baustelle einfach und rasch in der Schalung für etwa Ortbetondecken verlegt werden kann. Durch seine besondere mechanische Festigkeit kann es in weiterer Folge auch als lastaufnehmender Bauteil genutzt werden, so etwa zum Anbringen weiterer Bewehrungslagen, und bietet auch eine gute Schutzfunktion für seine Rohrleitungen gegen Beschädigungen bei der weiteren Verarbeitung. Die Verbindung kann mittels herkömmlicher Methoden bzw. Bauteile realisiert werden, etwa durch Umwickeln mit Draht, Verschraubung, etc.

Das Register kann bei Ausführung gemäß einem weiteren Erfindungsmerkmal, bestehend darin, dass das flächige Grundgerüst eine Matte aus Stahlstäben od. dgl. ist, vorzugsweise in rechtwinkeliger Anordnung und vorzugsweise mit Schweißverbindung an den Kreuzungsstellen, selbst bereits als Bewehrungslage verwendet werden. Dennoch ist es rasch und einfach unter Verwendung vorgefertigter Komponenten herstellbar, wobei auch die Verbindung zwischen den Komponenten einfach und rasch hergestellt werden kann. Dabei kann jegliche Art von Grundgerüst Verwendung finden, das ausreichend mechanische Stabilität verleiht, neben Stahlstäben können etwa andere metallische oder auch nichtmetallische Materialen wie vorzugsweise faserverstärkter Kunststoff verwendet werden.

Ein besonders guter Schutz der Rohrleitungen des Registers ist gemäß einem weiteren Merkmal der Erfindung bei einer Ausführungsform gegeben, bei der zumindest die parallel und vorteilhafterweise genau oberhalb der Rohrleitungen verlaufenden Stäbe verbreitert und in der Ebene der Matte orientiert ausgeführt sind. Diese verbreiterten Stäbe ― oder eher Stahlbänder oder ―streifen ― decken einen großen Bereich oberhalb der Rohrleitungen für das Heiz- und/oder Kühlmedium ab, die damit in einem größeren Winkelbereich vor beschädigenden Einflüssen geschützt sind, als dies bei Stäben mit geringerer Querausdehnung der Fall ist.

Besonders einfach ist die Herstellung der Verbindung des flächigen Grundgerüstes mit der Rohranordnung inklusive Halterung bei einer Ausführungsform, bei welcher erfindungsgemäß die Auflageleiste mit dem flächigen Grundgerüst zumindest teilweise durch Klemmverbindungen verbunden ist. Bei Fertigung mit entsprechend geringen Toleranzen kann vorteilhafterweise die Verbindung zwischen Auflageleiste und Grundgerüst zur Gänze durch Klemmverbindung verwirklicht werden, ansonst eben nur an einigen der oberen Klemmstellen.

Die letzte Aufgabe wird erfindungsgemäß durch einen flächigen Bauteil aus aushärtbarem Werkstoff, insbesondere eine Klimaplatte, Ortbetondecke oder Filigrandecke aus Beton, mit einem integrierten Heiz- oder Kühlregister und einer Bewehrung gelöst, welche erfindungsgemäß dadurch gekennzeichnet ist, dass das Heiz- oder Kühlregister gemäß einem der vorhergehenden Absätze ausgebildet ist. Durch dieses kennzeichnende Merkmal ist ein rasch, einfach und wirtschaftlich, selbst bei Herstellung vor Ort, herstellbarer Klima-Bauteil geschaffen, welcher zusätzlich noch hohe mechanische Stabilität, geringe Nachbearbeitungserfordernis und eine gleichmäßige Struktur über die gesamte Flächenausdehnung bietet.

In der nachfolgenden Beschreibung soll die Erfindung anhand eines bevorzugten Ausführungsbeispieles, dargestellt in den beigefügten Zeichnungen, näher erläutert werden.

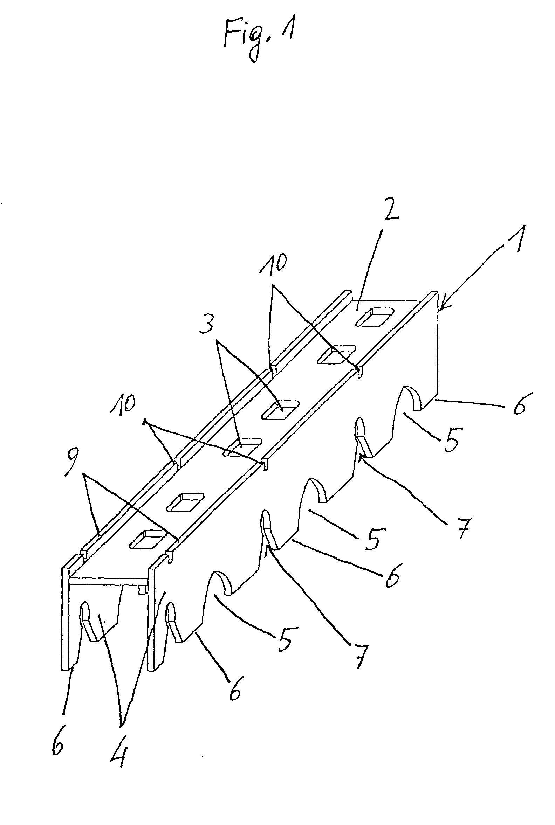

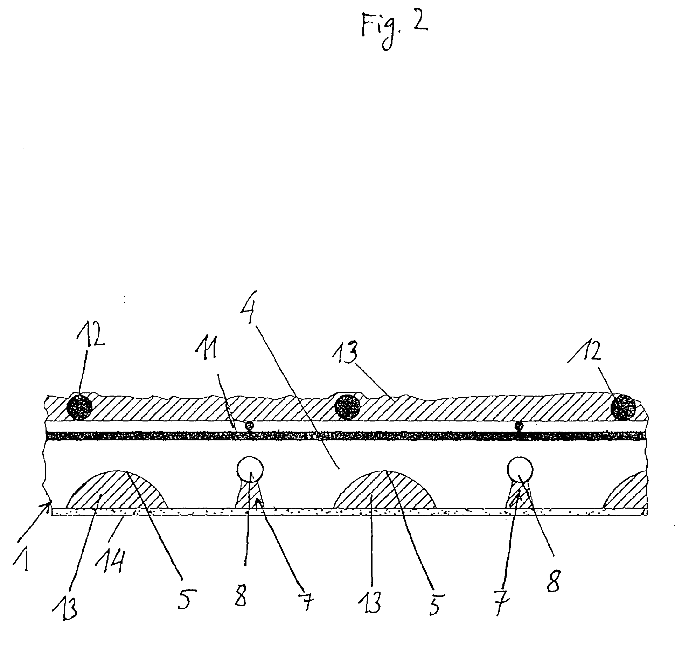

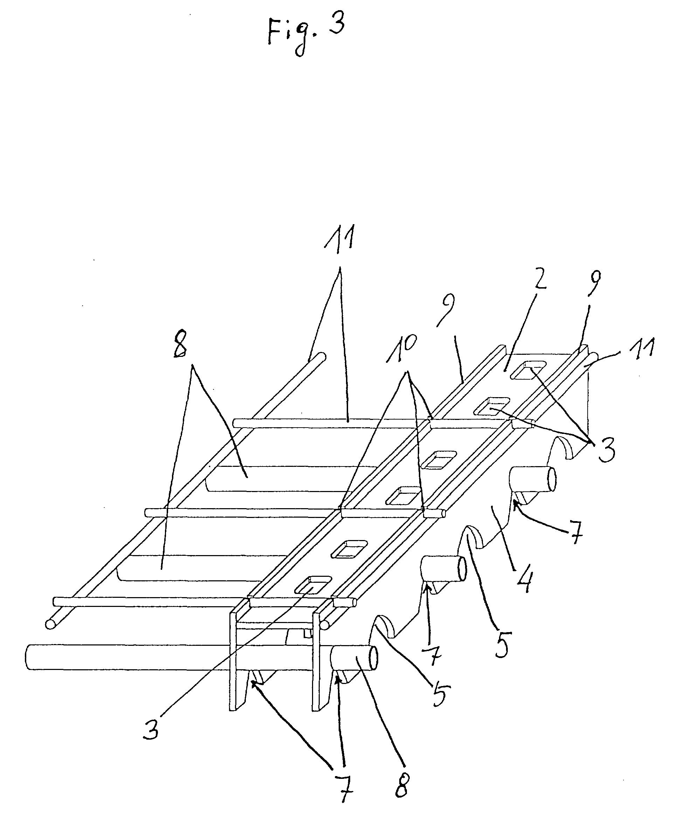

Dabei zeigt die Fig. 1 eine perspektivische Ansicht einer vorteilhaften Ausführungsform einer erfindungsgemäßen Auflageleiste, Fig. 2 ist ein teilweiser Schnitt durch eine Ortbetondecke mit einem erfindungsgemäßen Rohrregister zur Klimatisierung, und Fig. 3 zeigt einen Ausschnitt aus einem erfindungsgemäßen Rohrregister wie in Fig. 2 verwendet in perspektivischer Ansicht.

Die in Fig. 1 in verkürzter Ausführung, prinzipiell aber in beliebiger Länge herstellbare Auflageleiste ist als Unterlage und Abstandhalter gegenüber der Schalung für eine Bewehrungslage gedacht, wie sie für flächige Elemente aus aushärtbarem Werkstoff, insbesondere aus Beton, notwendig ist. Sie ist vorzugsweise als lastaufnehmender Bauteil für die untere Bewehrungslage von Ortbeton- oder Filigrandecken aus Beton oder für Bewehrungen von Klimaplatten geeignet und besteht aus einem im wesentlichen umgekehrt U-förmigen Profil 1, dessen Boden 2 mit Öffnungen 3 und dessen Seitenwände 4 mit Ausschnitten 5 zum Eindringen des aushärtbaren Werkstoffes auch in das Innere des Profils 1 versehen ist. Die Leiste liegt lediglich mit ihren schmalen Auflageflächen 6 auf der Schalung (nicht dargestellt) auf, so dass sich (wie in Fig. 2 erkennbar ist) eine schalreine Oberfläche erzielen lässt, weil die Fläche der Auflageflächen 6 gegenüber der übrigen Oberfläche des Bauteils vernachlässigbar klein ist.

Zusätzlich zu den großflächigen Ausschnitten 5, die vorteilhafterweise in Querrichtung des Profils 1 genau fluchtend angeordnet sind, sind in den Seitenwänden 4 des Profils 1 zusätzlich Klemmstellen 7 für weitere Bauteile, beispielsweise für Rohrleitungen 8 vorgesehen, durch welche Rohrleitungen ein Wärmeträgerfluid als Heiz- und/oder Kühlmedium für den vom herstellten Bauteil begrenzten Raum, geleitet werden kann (siehe Fig. 2). Diese Klemmstellen 7 sind vorteilhafterweise bei einfacher Herstellung durch Ausschnitte in den Seitenwänden 4 des Profils igebildet und derart entsprechend der Außenkontur der einzusetzenden Bauteile 8 geformt, dass sie mit diesen eine zumindest teilweise formschlüssige Verbindung bilden. Um das Einsetzen der Bauteile 8 zu erleichtern, hier als Rohre mit kreisrundem Querschnitt dargestellt, wobei aber der Querschnitt im Prinzip beliebig gewählt werden kann, solange die Klemmstelle 7 darauf abgestimmt ist, ist ausgehend von der Aufstandsfläche des Profils 1 auf der Schalung od. dgl. ein sich kontinuierlich verengender Abschnitt vorgesehen, der dann in die eigentliche Klemmstelle übergeht. Diese ist von der Auflagefläche des Profils, d.h. von der Oberfläche des hergestellten Bauteils beabstandet, um die Rohre 8 im vorbestimmen Abstand unter der Oberfläche des Bauteils zu halten. Vorzugsweise sind selbstverständlich auch die Klemmstellen 7 in beiden Seitenwänden 4 des Profils 1 in dessen Querrichtung im wesentlichen fluchtend angeordnet.

Wie in den Zeichnungen erkennbar ist, kann zur Erzielung der gewünschten Kühl-bzw. Heizleistung eine sehr dichte Anordnung der Rohrleitungen 8 erreicht werden. Dazu sind die Ausschnitte 5 im wesentlichen fluchtend angeordnet und Klemmstellen 7 zwischen je zwei benachbarten Paaren von fluchtenden Ausschnitten 5 vorgesehen. Auch die Ausschnitte 5 selbst könnten durch Klemmstellen 7 erweitert werden, was eine noch größere Dichte der Anordnung der Rohre 8 ermöglicht.

An der im eingesetzten Zustand von der Schalung, der Form od. dgl. wegragenden Seite des Profils 1, bei Ortbetondecken nach oben weisend, sind vorzugsweise in direkter Verlängerung der Seitenteile 4 des Profils 1 Stege 9 vorgesehen, die mit Klemmstellen 10 für weitere Bauteile, beispielsweise Stäbe einer Stahlgittermatter 11, eines Bewehrungsgitters od. dgl. versehen sind. Diese zusätzlichen Klemmstellen 10 im Bereich des Bodens 2 des Profils 1 sind vorteilhafterweise ebenfalls durch Ausschnitte in den Stegen 9 bzw. Seitenwänden 4 des Profils 1 gebildet und wirken vorteilhafterweise mit den eingesetzten Bauteilen 11 zur Herstellung einer zumindest teilweise formschlüssigen Verbindung zusammen. Zur bestmöglichen schützenden Abdeckung der Rohre 8 durch beispielsweise die Stäbe der Stahlgittermatte 11 sind die zusätzlichen Klemmstellen 10 in den Stegen 9 ebenfalls in Querrichtung des Profils 1 gesehen genau fluchtend und genau oberhalb der Klemmstellen 7 in den Seitenwänden 4 angeordnet.

Zusammen mit beispielsweise der oben erwähnten Stahlgittermatte 11 als großflächige Haltestruktur bilden die mehreren parallelen Leitungen 8 für das Heiz- und/oder Kühlmedium, in vorzugsweise ebener Anordnung und auch vorzugsweise verbunden durch integrierte Rohrbögen, ein besonders vorteilhaftes Heiz- bzw. Kühlregister zur Integrierung in flächige Bauteile aus einem aushärtbaren Werkstoff, insbesondere Ortbetondecken oder Filigrandecken aus Beton bzw. für Klimaplatten. Dabei sind diese Rohrleitungen 8 an der Stahlgittermatte 11 mittels des oben beschriebenen Profils 1 als Auflageleiste und gleichzeitig Abstandhalter befestigt. Vorzugsweise liegen dabei die Stahlstäbe der Matte 11 in rechtwinkeliger Anordnung vor und sind vorzugsweise durch Schweißverbindungen an den Kreuzungsstellen verbunden. Allenfalls können anstatt runder Stahlstäbe zumindest für die parallel und vorteilhafterweise genau oberhalb der Rohrleitungen 8 verlaufenden Elemente der Stahlgittermatte 11 verbreiterte und in der Ebene der Matte 11 orientierte Streifen oder Bänder verwendet werden, um einen noch besseren Schutz der darunterliegenden Rohre 8 zu gewährleisten.

Wie in Fig. 2 und 3 ganz deutlich zu erkennen ist, kommen die parallel zum Profil 1 verlaufenden Stäbe der Matte 11 etwa in der Höhe des Bodens 2 des Profils 1 zu liegen, wenn vorteilhafterweise die durch das Profil 1 gebildete Auflageleiste mit dem flächigen Grundgerüst in Form der Stahlgittermatte 11 durch eine Klemmverbindung in den Klemmstellen 10 verbunden ist.

Beim flächigen Bauteil, insbesondere einer Klimaplatte, einer Ortbetondecke oder auch einer Filigrandecke aus Beton, der mit einem integrierten Heiz- oder Kühlregister wie oben beschrieben und einer Bewehrung gemäß statischen Anforderungen versehen ist, wird vorteilhafterweise ein Heiz- oder Kühlregister integriert, das wie oben beschrieben ausgeführt ist. Dabei kann der aushärtbare Werkstoff, d.h. im allgemeinen der Beton 13, durch die Ausschnitte 5, auch die unteren Abschnitte der Klemmstellen 7 in den Seitenwänden 4 des Profils 1, in das Innere des Profils 1 eindringen und bis zur Schalung alle Zwischenräume zwischen Rohren 8, Bewehrung 12, usw. ausfüllen. Aufgrund der geringen Auflageflächen der Seitenwände 4 des Profils 1 auf der Schalung ergibt sich eine schalreine Oberfläche des Bauteils, welche dann sofort und ohne weitere aufwendige Vorbereitungsarbeiten mit einer Verputzschicht 14 versehen werden kann.

## Patentansprüche

1. Auflageleiste für eine Bewehrung für flächige Elementen aus aushärtbarem Werkstoff, vorzugsweise für die untere Bewehrungslage von Ortbeton- oder Filigrandecken aus Beton oder für Bewehrungen von Klimaplatten, bestehend aus einem im wesentlichen umgekehrt U-förmigen Profil (1), dessen Boden (2) mit Öffnungen (3) und dessen Seitenwände (4) mit Ausschnitten (5) zum Eindringen des aushärtbaren Werkstoffes versehen ist, **dadurch gekennzeichnet, dass** in den Seitenwänden (4) des Profils (1) zusätzlich Klemmstellen (7) für weitere Bauteile, beispielsweise Leitungen (8) für ein Heiz- und/oder Kühlmedium, ausgearbeitet sind.

2. Leiste nach Anspruch 1, **dadurch gekennzeichnet, dass** die Klemmstellen (7) durch Ausschnitte in den Seitenwänden (4) des Profils (1) gebildet sind, die vorteilhafterweise mit den eingesetzten Bauteilen (8) eine zumindest teilweise formschlüssige Verbindung bilden.

3. Leiste nach Anspruch 1 oder 2, **dadurch gekennzeichnet, dass** die Klemmstellen (7) in beiden Seitenwänden (4) des Profils (1) in dessen Querrichtung im wesentlichen fluchtend angeordnet sind.

4. Leiste nach einem der Ansprüche 1 bis 3, **dadurch gekennzeichnet, dass** die Ausschnitte (5) in den Seitenwänden (4) in Querrichtung des Profils (1) im wesentlichen fluchtend angeordnet sind und dass zumindest einige Klemmstellen (7) zwischen zwei benachbarten Paaren von fluchtenden Ausschnitten (5) vorgesehen sind.

5. Leiste nach einem der Ansprüche 1 bis 4, **dadurch gekennzeichnet, dass** an der Außenseite des Profils (1), im wesentlichen parallel zu dessen Seitenwänden (4), vorzugsweise fluchtend damit, Stege (9) mit Klemmstellen (10) für weitere Bauteile, beispielsweise Stäbe eines Bewehrungsgitters (11), vorgesehen sind.

6. Leiste nach Anspruch 5, **dadurch gekennzeichnet, dass** die Klemmstellen (10) durch Ausschnitte in den Stegen (9) gebildet sind, die vorteilhafterweise mit den eingesetzten Bauteilen (11) eine zumindest teilweise formschlüssige Verbindung bilden.

7. Leiste nach Anspruch 5 oder 6, **dadurch gekennzeichnet, dass** die Klemmstellen (10) in den Stegen (9) in Querrichtung des Profils (1) gesehen genau fluchtend mit den Klemmstellen (7) in dessen Seitenwänden (4) vorgesehen sind.

8. Heiz- bzw. Kühlregister zur Integrierung in flächige Bauteile aus einem aushärtbaren Werkstoff, insbesondere Ortbetondecken oder Filigrandecken aus Beton bzw. für Klimaplatten, bestehend aus mehreren parallelen Leitungen (8) für das Heiz- und/oder Kühlmedium in vorzugsweise ebener Anordnung, vorzugsweise verbunden durch integrierte Rohrbögen, und einer Haltestruktur mit fix angeordneten Klemmstellen für die Rohrleitungen, **dadurch gekennzeichnet, dass** die Haltestruktur aus einem flächigen Grundgerüst (11) besteht, das mit zumindest einer Auflageleiste (1) gemäß einem der Ansprüche 1 bis 7 verbunden ist.

9. Register nach Anspruch 8, **dadurch gekennzeichnet, dass** das flächige Grundgerüst eine Matte (11) aus Stahlstäben od. dgl. ist, vorzugsweise in rechtwinkeliger Anordnung und vorzugsweise mit Schweißverbindung an den Kreuzungsstellen.

10. Register nach Anspruch 9, **dadurch gekennzeichnet, dass** zumindest die parallel und vorteilhafterweise genau oberhalb der Rohrleitungen (8) verlaufenden Stäbe verbreitert und in der Ebene der Matte (11) orientiert ausgeführt sind.

11. Register nach einem der Ansprüche 8 bis 10, **dadurch gekennzeichnet, dass** die Auflageleiste (1) mit dem flächigen Grundgerüst (11) zumindest teilweise durch Klemmverbindungen (10) verbunden ist.

12. Flächiger Bauteil aus aushärtbarem Werkstoff, insbesondere Klimaplatte, Ortbetondecke oder Filigrandecke aus Beton, mit einem integrierten Heiz- oder Kühlregister und einer Bewehrung, **dadurch gekennzeichnet, dass** das Heiz- oder Kühlregister gemäß einem der Ansprüche 8 bis 11 ausgebildet ist.
